# EUROPÄISCHE PATENTSCHRIFT

(11) **EP 0 737 610 B1**
(45) Veröffentlichungstag und Bekanntmachung des Hinweises auf die Patenterteilung: **24.05.2000**
(21) Anmeldenummer: 96104750.3
(22) Anmeldetag: 26.03.1996
(51) Int. Cl.: B62D 5/06, B62D 5/12, B62D 5/22

(54) **Hydraulische Zahnstangenlenkung**
Hydraulic rack-and-pinion steering
Direction à crémaillère hydraulique

(30) Priorität: 15.04.1995 DE 19514244
(43) Veröffentlichungstag der Anmeldung: 16.10.1996
(73) Patentinhaber: TRW Fahrwerksysteme GmbH & Co. KG, 40547 Düsseldorf (DE)
(72) Erfinder: Eberhart, Eugen Dipl.-Ing., 40233 Düsseldorf (DE)
(74) Vertreter: Stenger, Watzke & Ring Patentanwälte

(56) Entgegenhaltungen:
- DE-U- 1 967 046
- GB-A- 1 444 631
- US-A- 4 828 068

## Beschreibung

Die Erfindung betrifft eine hydraulische Zahnstangenlenkung, bei welcher ein Arbeitskolben in einen Hydraulikzylinder geführt ist, welcher eine Endanschlagbegrenzung aufweist, die durch einen Weg für das über Druckmittelbohrungen zugeführte Druckmittel gebildet wird, über den in einer Endstellung des Arbeitskolbens der Druck beaufschlagte Arbeitsraum mit einem Arbeitsraum geringeren Drucks strömungstechnisch verbunden ist.

Zahnstangenlenkungen der beschriebenen Art sind aus dem Stand der Technik beaknnt.

Bei herkömmlichen hydraulischen Zahnstangenlenkungen ohne eine Endanschlagbegrenzung wird der Arbeitskolben durch die Druckbeaufschlagung solange in eine Richtung bewegt, bis irgendwo ein mechanischer Anschlag erreicht ist, beispielsweise ein im Bereich eines Spurstangen-Axialgelenkes und des Lenkungsgehäuses gebildeter Anschlag. Die Lenkung muß daher insgesamt auf eine höhere Belastung ausgelegt werden, was ein hohes Gewicht und entsprechende Produktionskosten zur Folge hat. Darüber hinaus gibt es durch den harten Endanschlag Geräuschentwicklungen, sowie eine hohe Belastung der Hydraulikpumpe.

Im Stand der Technik sind eine Reihe von Maßnahmen bekannt, die sich unter dem Oberbegriff Kraftausgleichshilfen zusammenfassen lassen. Derartige Vorrichtungen sind bekannt aus der US-PS 4828068, bei welcher eine Bypassleitung die beiden Arbeitsräume des Hydraulikzylinders miteinander verbindet. Weiterhin gehört dazu die DE 3721826 C1, in welcher sowohl ein Servolenkventil als auch die Arbeitsräume des Hydraulikzylinders mit einer Drosselstellenanordnung verbunden sind. Schließlich gehört dazu die DE 3929572 A1, bei welcher ebenfalls die beiden Arbeitsräume mittels einer Längsbohrung verbunden sind, die an beiden Enden gegenläufig gesteuerte Rückschlagventile aufweist. Alle genannten Vorrichtungen dienen dem Zweck, insbesondere die Lenkunterstützung in der Endanschlagposition zu verringern.

Die genannten Vorrichtungen können jedoch die beschriebenen Endanschlagsprobleme nicht beheben.

Aus der GB-PS 766784 ist eine gattungsgemäße hydraulische Zahnstangenlenkung bekannt, bei welcher der Arbeitskolben im Endanschlagsbereich in in der Innenwandung des Hydraulikzylinders angeordnete vertiefte Nutenbereiche hineinläuft, so daß die hydraulische Dichtung zwischen Kolben und Zylinderwandung aufgehoben wird. Aus der DE 1967046 U ist es bekannt, die Druckanschlußbereiche einerseits an den Enden des Zylinders anzuordnen, andererseits auch parallel nahe zur Mitte. Überläuft der Kolben den jeweiligen mittleren Anschlußbereich, können Drucksteuerungen eingreifen und so den Kolben im Endanschlag begrenzen. Aus der DE 4221459 A1 ist eine gattungsgemäße hydraulische Zahnstangenlenkung bekannt, bei welcher entweder ebenfalls die bereits bekannten nutartigen Vertiefungen oder im Gehäuseinneren ausgeführte Sackloch- bzw. Verbindungsbohrungen ausgeführt sind, um zwei zueinander parallele Druckmittelzuführungen von jedem einzelnen Druckmittelanschluß auszuführen.

Alle genannten Vorrichtungen machen aufwendige Gehäusegestaltungen und insbesondere auch aufwendige Bearbeitungen im Inneren des Hydraulikzylinders erforderlich. Die nutenartigen Vertiefungen müssen sorgfältig an der inneren Zylinderwandung ausgebildet werden. Die vorbekannten Bohrungen müssen von innen mit großem Aufwand ausgeführt werden. Die aus der DE 1967046 U bekannten Verbindungsleitungen befinden sich im Äußeren und stellen als Bypassleitungen zusätzliche Bauteile dar.

Insgesamt sind die vorbekannten hydraulischen Zahnstangenlenkungen in der Herstellung und im Materialbedarf aufwendig. Darüber hinaus können keine Abdichtungs- und Führungsprobleme an der Zylinderinnenwandung berücksichtigt werden. Werden beispielsweise von der Innenwandung aus Bohrungen ausgeführt, so können diese Bohrungen scharfkantig sein, so daß die Dichtungen der Kolben ungewöhnlich schnell abgearbeitet oder gar beschädigt werden, so daß die Standzeit herkömmlicher Zahnstangenlenkungen unbefriedigend ist.

Ausgehend von diesem Stand der Technik liegt der vorliegenden Erfindung die **Aufgabe** zugrunde, eine Zahnstangenlenkung der gattungsgemäßen Art dahingehend zu verbessern, daß diese mit geringerem wirtschaftlichen Aufwand einfach herstellbar ist, wobei aufwendige Bearbeitungen im Inneren des Hydraulikzylinders vermieden werden sollen. Auch soll auf zusätzliche Bauteile verzichtet werden.

Die **Lösung** dieser Aufgabenstellung durch die Erfindung ist gekennzeichnet durch eine Bohrung im Bereich jeder Druckanschlußbohrung, die über eine Verbindungsleitung mit der jeweiligen Druckanschlußbohrung verbindbar ist, wobei sowohl die Bohrung als auch die Verbindungsleitung von der Gehäuseaußenseite ausführbare und verschließbare Bohrungen sind.

Durch die erfindungsgemäße Weiterbildung wird die Möglichkeit geschaffen, einfach aufgebaute Gehäuse durch von außen angebrachte Bohrungen mit einer entsprechenden Endanschlagbegrenzung zu versehen. Die Bohrungen werden dann wieder an der Gehäuseaußenseite verschlossen und können im Inneren liegend entsprechende Verbindungssysteme bilden.

Gemäß einem Vorschlag der Erfindung umfaßt die erfindungsgemäße Zahnstangenlenkung eine jeweils zur jeweiligen Druckanschlußbohrung im wesentlichen parallele Bohrung, die in Richtung des jeweils anderen Druckanschlusses versetzt ist. Diese zwei zueinanderliegenden Bohrungen, über den Zylinder der Zahnstangenlenkung also insgesamt vier Bohrungen, liegen im wesentlichen zueinander parallel. Die zwei jeweils außenliegenden, d. h. zum Ende des Zylinders liegenden Bohrungen dienen dem Anschluß der Druckzuführleitungen. Die beiden innenliegenden Bohrungen können mit entsprechenden Verbindungsleitungen mit den Druckanschlüssen verbunden werden. Überläuft der Kolben die jeweils innere Bohrung, werden somit beide Druckanschlüsse miteinander verbunden, so daß eine hydraulische Endanschlagbegrenzung bereitgestellt ist. In vorteilhafter Weise ist der Abstand zwischen den inneren Bohrungen und den Druckanschlußbohrungen jeweils zueinander größer als der Arbeitskolben breit ist. Der Endanschlag liegt dann vor der jeweiligen Druckanschlußbohrung, was eine Bewegung des Kolbens in entgegengesetzter Richtung vereinfacht.

Gemäß einem weiteren Vorteil der Erfindung wird die Verbindungsleitung im wesentlichen in Kolbenbewegungsrichtung verlaufend ausgebildet. In vorteilhafter Weise ist diese Verbindungsleitung ebenfalls eine von der Gehäuseaußenseite ausgeführte Bohrung.

In besonders vorteilhafter Weise wird vorgeschlagen, daß die Bohrungen zum Zylinderinneren verjüngt sind. Diese Maßnahme bewirkt, daß die kolbenseitigen Dichtungen nur entlang sehr kleiner Kanten bewegt werden, so daß der Dichtungsverschleiß gering gehalten ist.

Gemäß einem weiteren vorteilhaften Vorschlag der Erfindung weist das Gehäuse eine haubenartige Erweiterung im Druckanschlußbereich auf. Diese haubenartige Erweiterung dient der Ausbildung der gewünschten Bohrungen und kann mit einfachen Mitteln hergestellt werden. Diese haubenartige Erweiterung kann nach Ausbildung einer Vertikalbohrung auch nachträglich angesetzt werden und eine Horizontalleitung aufweisen. Der äußere Dichtungsbereich kann mit herkömmlichen Mitteln, Schweißen, Kleben oder dergleichen gebildet werden. Durch diese Maßnahme ist die Herstellung der erforderlichen Leitungen besonders einfach.

Gemäß einem weiteren vorteilhaften Vorschlag der Erfindung ist in wenigstens einer der Bohrungen ein Rückschlagventil angeordnet. Durch die Anordnung des Rückschlagventiles können die unterschiedlichen Bewegungsrichtungen des Kolbens hydraulisch einfach realisiert werden.

Mit der Erfindung wird eine mit einfachen Mitteln und wirtschaftlich einfach herstellbare Zahnstangenlenkung vorgeschlagen, die über eine hydraulische Endanschlagbegrenzung verfügt, ohne die aus dem Stand der Technik bekannten Nachteile aufzuweisen.

Weitere Vorteile und Merkmale der Erfindung ergeben sich aus der folgenden Beschreibung anhand der Figuren. Dabei zeigen:
- Fig. 1: eine teilgeschnittene Darstellung des Zylinderbereiches einer Zahnstangenlenkung gemäß einem ersten Ausführungsbeispiel;
- Fig. 2: eine Darstellung gemäß Fig. 1 eines weiteren Ausführungsbeispiels;
- Fig. 3: eine Darstellung des Details III in Fig. 2 und
- Fig. 4: eine Detaildarstellung eines Kolbens.

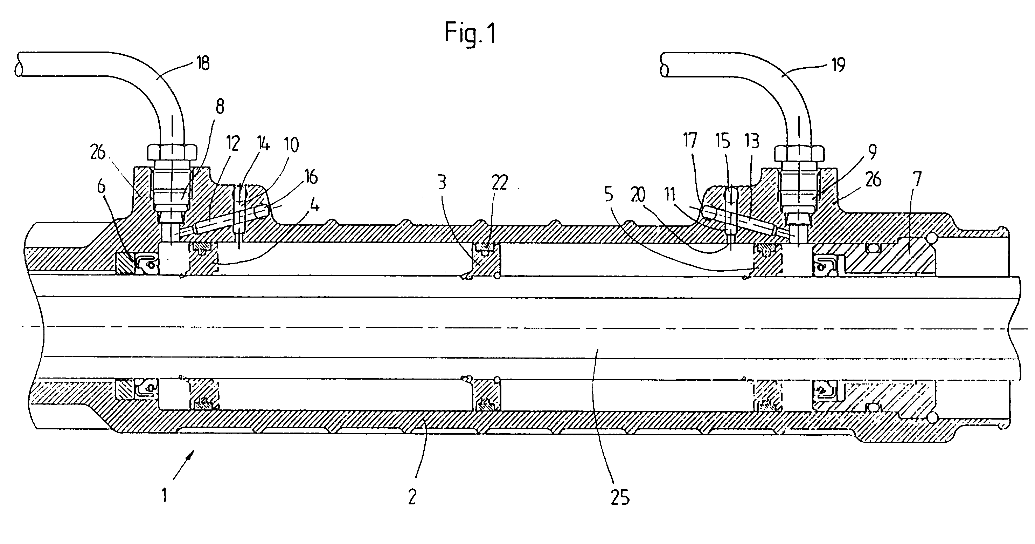

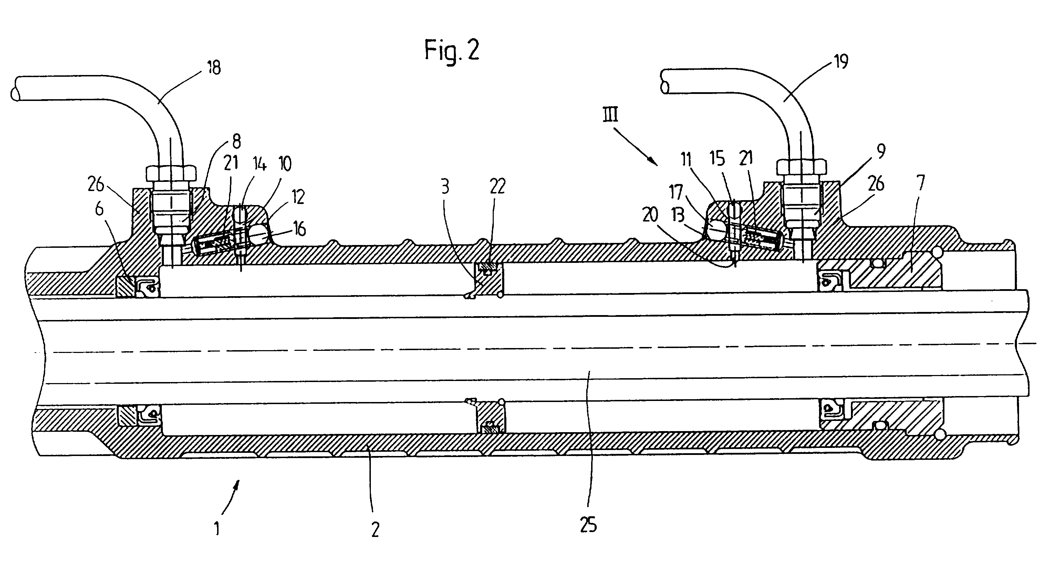

Bei den in den Figuren 1 und 2 gezeigten Zahnstangenlenkungen 1 ist jeweils der Bereich des Zylinders 2 gezeigt, in welchem ein Kolben 3, welcher auf einer Zahnstangenwelle 25 angeordnet ist, hin und her beweglich ist. Gestrichelt sind die Kolbenpositionen 4 und 5 in den jeweiligen Endanschlagsbereichen in Fig. 1 gezeigt.

Der Zylinder ist an beiden Enden durch eine Dichtung 6, 7 verschlossen. Die Zahnstangenwelle 25 ist in einer Richtung in nicht gezeigter Weise als Zahnstange ausgebildet und steht mit dem Ritzel eines Servolenkventils in Verbindung. An beiden äußeren Enden der Zahnstangenwelle ist diese in nicht gezeigter Weise mit nicht gezeigten Gelenken eines Lenksystems in Verbindung.

An beiden Enden des Zylinders 2, der in einem Gehäuse ausgebildet ist, ist ein Druckanschluß 8, 9 ausgebildet. Dieser ist in den gezeigten Ausführungsbeispielen in einer Erweiterung 26, die haubenförmig ausgebildet ist, untergebracht. Die Druckleitungen 18, 19 werden mit herkömmlichen Schraubanschlüssen in die Gewindebohrungen 8, 9 eingesetzt. Beide Seiten des Kolbens können nunmehr mit Druck beaufschlagt werden. Jeweils zur Zylindermitte versetzt ist neben jedem Druckanschluß 8,9 eine Parallelbohrung 10, 11 ausgebildet, welche durch eine Verbindungsbohrung 12, 13 mit dem Druckanschluß 8,9 in Verbindung steht. Wird der Kolben 3 über die Druckleitung 19 und den Druckanschluß 9, welche jeweils in die rechte Zylinderkammer führen, mit Druck beaufschlagt, so wandert er in Bildebene gesehen nach links. Überläuft er die Parallelbohrung 10, wird über die Parallelbohrung 10 und die Verbindungsbohrung 12 der Druckanschluß 8 und damit die abführende Druckleitung 18 mit der rechten Zylinderkammer verbunden. Es kommt somit zu einem teilweisen Druckausgleich und der Kolben fährt mit reduziertem Druck in die Endanschlagsposition. Durch die Umkehr der Druckführung kann der Kolben auf der linken Seite mit Druck beaufschlagt werden und bewegt sich dann bis in die in Fig. 1 gezeigte rechte Endanschlagsposition.

Die Parallel- und Verbindungsbohrungen 10, 11, 12, 13 sind im unteren Bereich verjüngt dargestellt, d. h. als sogenannte Blendenbohrungen 20 ausgeführt.

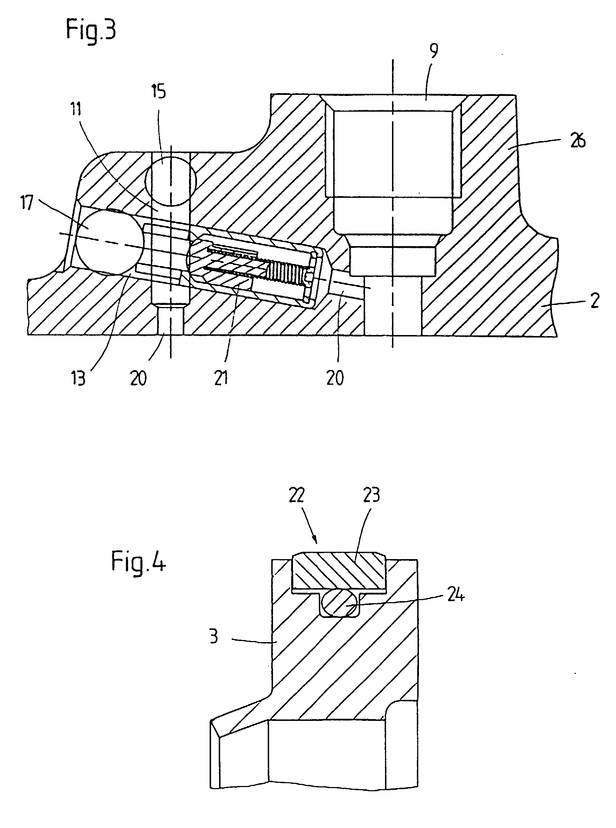

In Fig. 2 ist zusätzlich zu dem in Fig. 1 gezeigten Ausführungsbeispiel in die Verbindungsbohrung 12 und die Verbindungsbohrung 13 jeweils ein Rückschlagventil 21 eingesetzt. In Fig. 3 ist dieses Detail anhand der rechten Druckanschlußbohrung 9 gezeigt. Das Rückschlagventil öffnet in dem Falle, daß der Kolben bei einer Bewegung in die in Fig. 1 gezeigte rechte Anschlagposition über die Parallelbohrung 11 hinwegläuft. Der über die Druckleitung 18 zugeführte Druck wird dann über den Druckanschluß 9 in die Druckleitung 19 zurückgeführt. Wird der Kolben auf der rechten Seite mit Druck beaufschlagt, d. h. über die Druckleitung 19 und den Druckanschluß 9, so schließt das Rückschlagventil 21 und die Kolbenanfahrt wird hydraulisch voll unterstützt wie bei Lenkgetrieben ohne Endanschlagsbegrenzungs-Einrichtung.

Die als Blendenbohrung 20 ausgeführten Bohrungen, die im übrigen sämtlich mit an sich bekannten Verschlußmitteln verschlossen sind, werden an der Zylinderinnenwandung von dem Kolben mit seinen äußeren Dichtungen überfahren. In Fig. 4 ist ein Ausführungsbeispiel dargestellt. Der Kolben 3, der so ausgestaltet ist, daß er einfach auf die Zahnstangenwelle 25 aufsetzbar ist, indem er mit seiner rechten Kante, in welcher eine Nutaussparung ausgebildet ist, auf einem auf die Zahnstangenwelle 25 aufgeschobenen Ring verrastet wird und mit seinem linken, nasenartig vorstehenden Ende in eine Nut einrastet, die in der Zahnstangenwelle 25 ausgebildet ist, weist am äußeren Ende eine Nut zur Aufnahme einer Kolbendichtung 22 auf. Dies ist im gezeigten Ausführungsbeispiel aus einem äußeren Dichtungsring 23 und einem inneren Dichtungsring 24 gebildet, wobei der innere Dichtungsring radiale Federkräfte aufbringt, um den äußeren Dichtungsring 23 in einen Anschlag zur Innenwandung des Zylinders 2 zu bringen. Besonders wesentlich ist dabei die breite Ausführung des Dichtringes, wodurch verhindert wird, daß die Dichtungen durch das Überfahren der Blendenbohrungen nicht beschädigt werden.

Die im gezeigten Ausführungsbeispiel ausgeführt Erweiterung 26 ist einstückig mit dem Gehäuse ausgebildet und erhebt sich hauben- oder kuppelartig um die Druckanschlüsse 8 und 9. Diese Erweiterung kann auch durch zusätzlich aufgebrachte und dichtend mit dem Gehäuse verbundene Schalenelemente gebildet sein, die Gewindebohrungen, Längs- und Querbohrungen und dergleichen aufweist. Bohrungen können in diesem Falle auch durch gefräste Nuten in der Erweiterungsschale ausgebildet sein.

### Bezugszeichenliste

- 1: Zahnstangenlenkung
- 2: Zylinder
- 3: Kolben
- 4: Kolbenposition
- 5: Kolbenposition
- 6: Dichtung
- 7: Dichtung
- 8: Druckanschluß
- 9: Druckanschluß
- 10: Parallelbohrung
- 11: Parallelbohrung
- 12: Verbindungsbohrung
- 13: Verbindungsbohrung
- 14: Verschluß
- 15: Verschluß
- 16: Verschluß
- 17: Verschluß
- 18: Druckleitung
- 19: Druckleitung
- 20: Blendenbohrung
- 21: Rückschlagventil
- 22: Kolbendichtung
- 23: Außenring
- 24: Innenring
- 25: Zahnstangenwelle
- 26: Erweiterung

## Patentansprüche

1. Hydraulische Zahnstangenlenkung (1), bei welcher ein Arbeitskolben (3) in einem Gehäuse ausgebildeten in einem Hydraulikzylinder (2) geführt ist, welcher eine Endanschlagbegrenzung aufweist, die durch einen Weg für das über Druckmittelbohrungen zugeführte Druckmittel gebildet wird, über den in einer Endstellung des Arbeitskolbens (3) der Druck beaufschlagte Arbeitsraum mit einem Arbeitsraum geringeren Drucks strömungstechnisch verbunden ist **gekennzeichnet durch**
eine Bohrung (10, 11) im Bereich jeder Druckanschlußbohrung (8, 9), die über eine Verbindungsleitung (12, 13) mit der jeweiligen Druckanschlußbohrung (8, 9) verbindbar ist, wobei sowohl die Bohrung (10, 11) als auch die Verbindungsleitung (12, 13) von der Gehäuseaußenseite ausführbare und verschließbare Bohrungen sind.

2. Zahnstangenlenkung nach Anspruch 1, dadurch gekennzeichnet, daß diese im Bereich jeder Druckanschlußbohrung (8, 9) eine zu dieser im wesentlichen parallele Bohrung (10, 11) aufweist, die in Richtung der jeweils anderen Druckanschlußbohrung (8, 9) versetzt ausgebildet ist.

3. Zahnstangenlenkung nach Anspruch 2, dadurch gekennzeichnet, daß der Abstand zwischen der jeweiligen Druckanschlußbohrung (8, 9) und der zusätzlichen im wesentlichen parallel verlaufenden Bohrung (10, 11) größer ist als die Breite des Kolbens (3) der Zahnstangenlenkung (1).

4. Zahnstangenlenkung nach einem der vorhergehenden Ansprüche, dadurch gekennzeichnet, daß die Verbindungsleitung (12, 13) eine im wesentlichen in Kolbenbewegungsrichtung verlaufende Bohrung ist.

5. Zahnstangenlenkung nach einem der vorhergehenden Ansprüche, dadurch gekennzeichnet, daß die Bohrungen (8, 9, 10, 11, 12, 13) zum Zylinderinneren hin verjüngt sind.

6. Zahnstangenlenkung nach einem der vorhergehenden Ansprüche, dadurch gekennzeichnet, daß das Gehäuse im Druckanschlußbereich haubenartig erweitert (26) ist.

7. Zahnstangenlenkung nach einem der vorhergehenden Ansprüche, dadurch gekennzeichnet, daß in wenigstens einer der Bohrungen ein Rückschlagventil (21) angeordnet ist.

## Claims

1. Hydraulic toothed-rack steering system (1) in which a working piston (3) is guided in a hydraulic cylinder (2) which is constructed in a housing and has an end-stop limiting system which is formed by a path for the pressure medium fed in via pressure-medium bores, via which path the pressurized working space is connected hydrodynamically, in an end position of the working piston (3), to a working space of lower pressure,
**characterised by**
a bore (10, 11) in the region of each pressure-connection bore (8, 9), which bore (10, 11) can be connected via a connecting line (12, 13) to the particular pressure-connection bore (8, 9), both the bore (10, 11) and also the connecting line (12, 13) being bores which can be manufactured and closed from the outside of the housing.

2. Toothed-rack steering system according to claim 1, characterised in that the said system has, in the region of each pressure-connection bore (8, 9), a bore (10, 11) which is essentially parallel to the latter and which is constructed so as to be offset in the direction of the other pressure-connection bore (8, 9) in each case.

3. Toothed-rack steering system according to claim 2, characterised in that the distance between the particular pressure-connection bore (8, 9) and the additional bore (10, 11) which extends in an essentially parallel manner, is greater than the breadth of the piston (3) of the toothed-rack steering system (1).

4. Toothed-rack steering system according to one of the preceding claims, characterised in that the connecting line (12, 13) is a bore extending essentially in the direction of movement of the piston.

5. Toothed-rack steering system according to one of the preceding claims, characterised in that the bores (8, 9, 10, 11, 12, 13) are tapered towards the interior of the cylinder.

6. Toothed-rack steering system according to one of the preceding claims, characterised in that the housing is widened in a hood-like manner (26) in the pressure-connection region.

7. Toothed-rack steering system according to one of the preceding claims, characterised in that a non-return valve (21) is disposed in at least one of the bores.

## Revendications

1. Direction à crémaillère hydraulique (1) dans laquelle un piston de travail (3) est guidé dans un cylindre hydraulique (2) réalisé dans un boîtier et comportant une limitation de butée de fin de course qui est formée par un passage destiné à l'agent de pression introduit par des trous à agent de pression, par l'intermédiaire duquel, lorsque le piston de travail (3) est dans une position extrême, la chambre de travail sous pression est reliée, sur le plan hydraulique, à une chambre de travail à une pression plus faible, caractérisée par un trou (10, 11) situé dans la zone de chaque trou de prise de pression (8, 9) et pouvant être relié par l'intermédiaire d'un conduit de raccordement (12, 13) au trou de prise de pression correspondant (8, 9), le trou (10, 11) tout comme le conduit de raccordement (12, 13) pouvant être réalisés et obturés depuis l'extérieur du boîtier.

2. Direction à crémaillère hydraulique selon la revendication 1, caractérisée en ce que celle-ci comporte, dans la zone de chaque trou de prise de pression (8, 9), un trou (10, 11) qui est sensiblement parallèle à ce dernier et qui est réalisé en décalage vers l'autre trou de prise de pression (8, 9).

3. Direction à crémaillère hydraulique selon la revendication 2, caractérisée en ce que l'écart entre chaque trou de prise de pression (8, 9) et le trou supplémentaire sensiblement parallèle (10, 11) est supérieur à la largeur du piston (3) de la direction à crémaillère hydraulique (1).

4. Direction à crémaillère hydraulique selon l'une des revendications précédentes, caractérisée en ce que le conduit de raccordement (12, 13) est un trou qui s'étend sensiblement dans la direction de déplacement du piston.

5. Direction à crémaillère hydraulique selon l'une des revendications précédentes, caractérisée en ce que les trous (8, 9, 10, 11, 12, 13) sont réduits en direction de l'intérieur du cylindre.

6. Direction à crémaillère hydraulique selon l'une des revendications précédentes, caractérisée en ce que le boîtier est élargi à la manière d'une calotte (26) dans la zone de prise de pression.

7. Direction à crémaillère hydraulique selon l'une des revendications précédentes, caractérisée en ce qu'une soupape de non-retour (21) est disposée dans au moins un des trous.
